# EUROPEAN PATENT SPECIFICATION

(11) **EP 4 246 054 B1**
(45) Date of publication and mention of the grant of the patent: **09.12.2026**
(21) Application number: 23190246.1
(22) Date of filing: 17.10.2018
(51) Int. Cl.: C09K 5/04, F25B 1/00

(54) **COMPOSITION CONTAINING REFRIGERANT, USE OF SAID COMPOSITION, REFRIGERATOR HAVING SAID COMPOSITION, AND METHOD FOR OPERATING SAID REFRIGERATOR**
ZUSAMMENSETZUNG MIT KÜHLMITTEL, VERWENDUNG DIESER ZUSAMMENSETZUNG, KÜHLSCHRANK MIT DIESER ZUSAMMENSETZUNG UND VERFAHREN ZUM BETRIEB DIESES KÜHLSCHRANKS
COMPOSITION CONTENANT UN FLUIDE FRIGORIGÈNE, UTILISATION DE LADITE COMPOSITION, RÉFRIGÉRATEUR DOTÉ DE LADITE COMPOSITION ET PROCÉDÉ DE FONCTIONNEMENT DUDIT RÉFRIGÉRATEUR

(30) Priority: 18.12.2017 JP 2017242187
(43) Date of publication of application: 20.09.2023
(60) Divisional application: 26194439.1 / 4 807 287
(62) Document number(s) of the earlier application(s) in accordance with Art. 76 EPC: 18891859.3 / 3 730 578
(73) Proprietor: Daikin Industries, Ltd., Osaka-shi, Osaka 530-0001 (JP)
(72) Inventor: Itano, Mitsushi, Osaka-shi, Osaka, 530-0001 (JP); Karube, Daisuke, Osaka-shi, Osaka, 530-0001 (JP); Yotsumoto, Yuuki, Osaka-shi, Osaka, 530-0001 (JP); Takahashi, Kazuhiro, Osaka-shi, Osaka, 530-0001 (JP)
(74) Representative: Hoffmann Eitle

(56) References cited:
- US-A1- 2017 058 173
- US-A1- 2017 058 174

## Description

### Technical Field

The present disclosure relates to a composition comprising a refrigerant, use of the composition, a refrigerating machine having the composition, and a method for operating the refrigerating machine.

### Background Art

R410A is currently used as an air conditioning refrigerant for home air conditioners etc. R410A is a two-component mixed refrigerant of difluoromethane (CH₂F₂: HFC-32 or R32) and pentafluoroethane (C₂HF₅: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (PTL 1).
PTL 2 relates to a working fluid for heat cycle containing 1,2-difluoroethylene, which has stability, and which has cycle performance as an alternative to R410A (a pseudoazeotropic mixture refrigerant of difluoromethane and pentafluoroethane in a mass ratio of 1:1) or 1,1,1,2-tetrafluoroethane while the influence over global warming is suppressed, a composition for a heat cycle system comprising it, and a heat cycle system employing the composition. PTL2 discloses ternary compositions comprising HFO-1132(E), HFC-32 and HFO-1234yf.
PTL 3 relates to a composition for a heat cycle system, which comprises a working fluid for heat cycle which has a low global warming potential and high stability, and which can replace R410A, and a heat cycle system employing said composition. PTL3 discloses a composition for a heat cycle system, which comprises a working fluid for heat cycle containing 1,2-difluoroethylene, and a stabilizer for preventing deterioration of the working fluid for heat cycle, such as an oxidation resistance-improving agent, a heat resistance-improving agent or a metal deactivator, and a heat cycle system employing the composition for a heat cycle system. PTL3 discloses ternary compositions comprising HFO-1132(E), HFC-32 and HFO-1234yf.

### Citation List

### Patent Literature

PTL 1: WO2015/186557
PTL 2: US2017/0058173
PTL 3: US2017/0058 174

### Summary of Invention

### Technical Problem

The present inventors performed independent examination, and conceived of the idea that no prior art had developed refrigerant compositions having three types of performance; i.e., a refrigerating capacity (also referred to as "cooling capacity" or "capacity") that is equivalent to that of R410A, a sufficiently low GWP, and a lower flammability (Class 2L) according to the standard of the American Society of Heating, Refrigerating and Air-Conditioning Engineers (ASHRAE). An object of the present disclosure is to solve this unique problem.

### Solution to Problem

The invention is defined by the appended claims.

### Advantageous Effects of Invention

The refrigerant according to the present disclosure has three types of performance; i.e., a refrigerating capacity that is equivalent to that of R410A, a sufficiently low GWP, and a lower flammability (Class 2L) according to the ASHRAE standard.

### Brief Description of Drawing

Fig. 1 is a schematic view of an apparatus used in measuring a burning velocity.
Fig. 2 is a view showing points A to C, E, G, and I to W; and line segments that connect points A to C, E, G, and I to W in a ternary composition diagram in which the sum of HFO-1132(E), R32, and R1234yf is 100 mass%.

### Description of Embodiments

The present inventors conducted intensive studies to solve the above problem, and consequently found that a mixed refrigerant comprising trans-1,2-difluoroethylene (HFO-1132(E)), difluoromethane (HFC-32 or R32), and 2,3,3,3-tetrafluoro-1-propene (HFO-1234yf or R1234yf) has the properties described above.

The present disclosure has been completed as a result of further research based on this finding. The present disclosure includes the following embodiments.

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having a "WCF lower flammability" means that the most flammable composition (worst case of formulation for flammability: WCF) has a burning velocity of 10 cm/s or less according to the US ANSI/ASHRAE Standard 34-2013. Further, in the present specification, a refrigerant having "ASHRAE lower flammability" means that the burning velocity of WCF is less than 10 cm/s, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that flammability classification according to the US ANSI/ASHRAE Standard 34-2013 is determined to be classified as "Class 2L."

### 1. Refrigerant

### 1.1 Refrigerant Component

The refrigerant according to the present disclosure is a mixed refrigerant comprising trans-1,2-difluoroethylene (HFO-1132(E)), difluoromethane (R32), and 2,3,3,3-tetrafluoro-1-propene (R1234yf).

The refrigerant according to the present disclosure has various properties that are desirable as an R410A-alternative refrigerant; i.e., a refrigerating capacity equivalent to that of R410A, a sufficiently low GWP, and a lower flammability (Class 2L) according to the ASHRAE standard.

The refrigerant according to the present disclosure is a refrigerant wherein
when the mass% of HFO-1132(E), R32, and R1234yf based on their sum is respectively represented by x, y, and z, coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:
   point M (52.6, 0.0, 47.4),
   point M' (39.2, 5.0, 55.8),
   point N (27.7, 18.2, 54.1),
   point V (11.0, 18.1, 70.9), and
   point G (39.6, 0.0, 60.4),
   or on these line segments (excluding the points on the line segment GM);
the line segment MM' is represented by coordinates (0.132y²-3.34y+52.6, y, -0.132y²+2.34y+47.4);
the line segment M'N is represented by coordinates (0.0596y²-2.2541y+48.98, y, -0.0596y²+1.2541y+51.02);
the line segment VG is represented by coordinates (0.0123y²-1.8033y+39.6, y, -0.0123y²+0.8033y+60.4); and
the line segments NV and GM are straight lines. When the requirements above are satisfied, the refrigerant according to the present disclosure has a refrigerating capacity ratio of 70% or more relative to R410A, a GWP of 125 or less, and an ASHRAE lower flammability.

The refrigerant according to the present disclosure may further comprise other additional refrigerants in addition to HFO-1132(E), R32, and R1234yf, as long as the above properties and effects are not impaired. In this respect, the refrigerant according to the present disclosure preferably comprises HFO-1132(E), R32, and R1234yf in a total amount of 99.5 mass% or more, more preferably 99.75 mass% or more, and still more preferably 99.9 mass% or more based on the entire refrigerant.

Such additional refrigerants are not limited, and can be selected from a wide range of refrigerants. The mixed refrigerant may comprise a single additional refrigerant, or two or more additional refrigerants.

### 1.2. Use

The refrigerant according to the present disclosure can be preferably used as a working fluid in a refrigerating machine.

The composition according to the present disclosure is suitable for use as an alternative refrigerant for R410A.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers. It is preferable that a compound that cannot be an impurity inevitably mixed into the refrigerant according to the present disclosure is selected as the tracer.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a fluorocarbon, a hydrochlorocarbon, a fluorocarbon, or a fluoroether.

Specifically, the following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1, 1, 1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The tracer compound can be present in the refrigerant composition at a total concentration of about 10 parts per million by weight (ppm) to about 1000 ppm. The tracer compound is preferably present in the refrigerant composition at a total concentration of about 30 ppm to about 500 ppm, and most preferably about 50 ppm to about 300 ppm.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

### 3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt (mm²/s) at 40°C is preferable from the standpoint of lubrication.

The refrigeration oil-containing working fluid according to the present disclosure may further optionally contain at least one additive. Examples of additives include compatibilizing agents described below.

### 3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### Examples

The present disclosure is described in more detail below with reference to Examples. However, the present disclosure is not limited to the Examples.

The composition of each mixed refrigerant of HFO-1132(E), R32, and R1234yf was defined as WCF. A leak simulation was performed using the NIST Standard Reference Database REFLEAK Version 4.0 under the conditions of Equipment, Storage, Shipping, Leak, and Recharge according to the ASHRAE Standard 34-2013. The most flammable fraction was defined as WCFF.

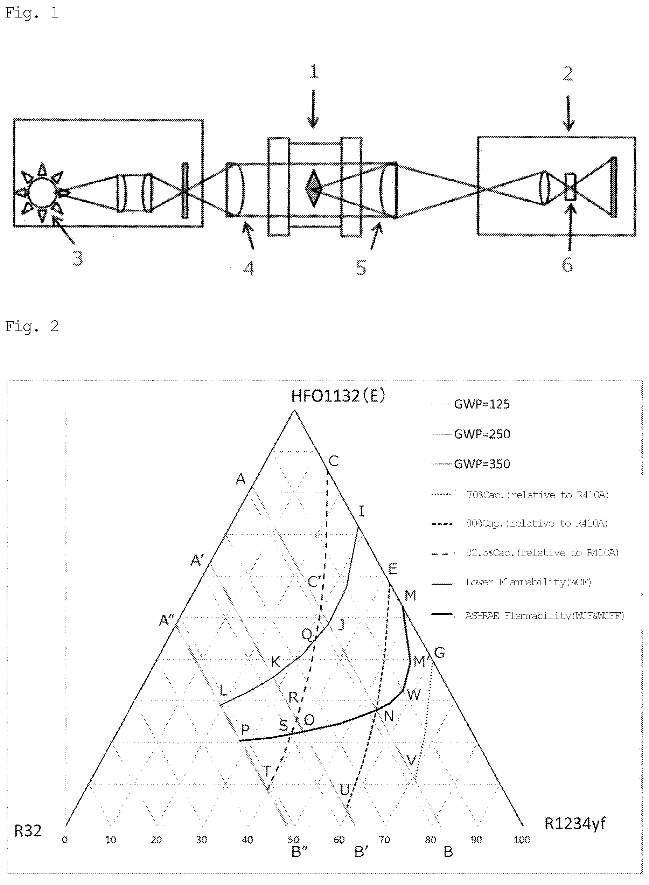

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. Schlieren images of the flame were recorded by a high-speed digital video camera at a frame rate of 600 fps and stored on a PC. Tables 1 to 3 show the results.

**Table 1**

| Item | | Unit | Comparative Example 13 | Example 11* | Example 12* | Example 13* | Example 14* | Example 15* | Example 16* |
|---|---|---|---|---|---|---|---|---|---|
| | | | I | | J | | K | | L |
| WCF | HFO-1132 (E) | Mass% | 72 | 57.2 | 48.5 | 41.2 | 35.6 | 32 | 28.9 |
| | R32 | Mass% | 0 | 10 | 18.3 | 27.6 | 36.8 | 44.2 | 51. 7 |
| | R1234yf | Mass% | 28 | 32.8 | 33.2 | 31.2 | 27.6 | 23.8 | 19.4 |
| Burning Velocity (WCF) | | cm/s | 10 | 10 | 10 | 10 | 10 | 10 | 10 |

**Table 2**

| Item | | Unit | Comparative Example 14 | Example 18 | Example 19 | Example 20 | Example 21 | Example 22* |
|---|---|---|---|---|---|---|---|---|
| | | | M | | W | | N | |
| WCF | HFO-1132 (E) | Mass% | 52.6 | 39.2 | 32.4 | 29.3 | 27.7 | 24.6 |
| | R32 | Mass% | 0.0 | 5.0 | 10.0 | 14.5 | 18.2 | 27.6 |
| | R1234yf | Mass% | 47.4 | 55.8 | 57.6 | 56.2 | 54.1 | 47.8 |
| Leak condition that results in WCFF | | | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side | Storage, Shipping, -40°C, 0% release, on the gas phase side |
| WCF | HFO-1132 (E) | Mass% | 72.0 | 57.8 | 48.7 | 43.6 | 40.6 | 34.9 |
| | R32 | Mass% | 0.0 | 9.5 | 17.9 | 24.2 | 28.7 | 38.1 |
| | R1234yf | Mass% | 28.0 | 32.7 | 33.4 | 32.2 | 30.7 | 27.0 |
| Burning Velocity (WCF) | | cm/s | 8 or less | 8 or less | 8 or less | 8 or less | 8 or less | 8 or less |
| Burning Velocity (WCFF) | | cm/s | 10 | 10 | 10 | 10 | 10 | 10 |

**Table 3**

| Item | | Unit | Example 23* | Example 24* | Example 25* |
|---|---|---|---|---|---|
| | | | O | | P |
| WCF | HFO-1132 (E) | Mass% | 22.6 | 21.2 | 20.5 |
| | HEO-1123 | Mass% | 36.8 | 44.2 | 51. 7 |
| | R1234yf | Mass% | 40.6 | 34.6 | 27.8 |
| Leak condition that results in WCFF | | | Storage, Shipping, -40°C, 0% release, on the gas phase side | Storage, Shipping, -40°C, 0% release, on the gas phase side | Storage, Shipping, -40°C, 0% release, on the gas phase side |
| WCFF | HFO-1132 (E) | Mass% | 31.4 | 29.2 | 27.1 |
| | HFO-1123 | Mass% | 45.7 | 51.1 | 56.4 |
| | R1234yf | Mass% | 23.0 | 19.7 | 16.5 |
| Burning Velocity (WCF) | | cm/s | 8 or less | 8 or less | 8 or less |
| Burning Velocity (WCFF) | | cm/s | 10 | 10 | 10 |

The results indicate that under the condition that the mass% of HFO-1132(E), R32, and R1234yf based on their sum is respectively represented by x, y, and z, when coordinates (x,y,z) in the ternary composition diagram shown in Fig. 2 in which the sum of HFO-1132(E), R32, and R1234yf is 100 mass% are on the line segment that connects point I, point J, point K, and point L, or below these line segments, the refrigerant has a WCF lower flammability.

The results also indicate that when coordinates (x,y,z) in the ternary composition diagram shown in Fig. 2 are on the line segments that connect point M, point M', point W, point J, point N, and point P, or below these line segments, the refrigerant has an ASHRAE lower flammability.

Mixed refrigerants were prepared by mixing HFO-1132(E), R32, and R1234yf in amounts (mass%) shown in Tables 2 to 6 based on the sum of HFO-1132(E), R32, and R1234yf. The coefficient of performance (COP) ratio and the refrigerating capacity ratio relative to R410 of the mixed refrigerants shown in Tables 2 to 6 were determined. The conditions for calculation were as described below.
Evaporating temperature: 5°C
Condensation temperature: 45°C
Degree of superheating: 5 K
Degree of subcooling: 5 K
Compressor efficiency: 70%

Tables 4 to 32 show these values together with the GWP of each mixed refrigerant.

**Table 4**

| Item | Unit | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| | | | A | B | A' | B' | A" | B" |
| HFO-1132 (E) | Mass% | R410A | 81.6 | 0.0 | 63.1 | 0.0 | 48.2 | 0.0 |
| R32 | Mass% | | 18.4 | 18.1 | 36.9 | 36.7 | 51.8 | 51.5 |
| R1234yf | Mass% | | 0.0 | 81.9 | 0.0 | 63.3 | 0.0 | 48.5 |
| GWP | - | 2088 | 125 | 125 | 250 | 250 | 350 | 350 |
| COP Ratio | %(relative to R410A) | 100 | 98.7 | 103.6 | 98.7 | 102.3 | 99.2 | 102.2 |
| Refrigerating Capacity Ratio | %(relative to R410A) | 100 | 105.3 | 62.5 | 109.9 | 77.5 | 112.1 | 87.3 |

**Table 5**

| Item | Unit | Comparative Example 8 | Comparative Example 9 | Comparative Example 10 | Example 1* | Example 2* | Example 3* | Example 4* |
|---|---|---|---|---|---|---|---|---|
| | | C | | C' | | R | | T |
| HFO-1132 (E) | Mass% | 85.5 | 66.1 | 52.1 | 37.8 | 25.5 | 16.6 | 8.6 |
| R32 | Mass% | 0.0 | 10.0 | 18.2 | 27.6 | 36.8 | 44.2 | 51.6 |
| R1234yf | Mass% | 14.5 | 23.9 | 29.7 | 34.6 | 37.7 | 39.2 | 39.8 |
| GWP | - | 1 | 69 | 125 | 188 | 250 | 300 | 350 |
| COP Ratio | %(relative to R410A) | 99.8 | 99.3 | 99.3 | 99.6 | 100.2 | 100.8 | 101.4 |
| Refrigerating Capacity Ratio | %(relative to R410A) | 92.5 | 92.5 | 92.5 | 92.5 | 92.5 | 92.5 | 92.5 |

| | | | | | | | | |
|---|---|---|---|---|---|---|---|---|
| *examples labelled by an asterisk (*) are not according to the invention | | | | | | | | |

**Table 6**

| Item | Unit | Comparative Example 11 | Example 5* | Example 6 | Example 7* | Example 8* | Comparative Example 12 | Example 9 | Example 10 |
|---|---|---|---|---|---|---|---|---|---|
| | | E | | N | | U | G | | V |
| HFO-1132 (E) | Mass% | 58.3 | 40.5 | 27.7 | 14.9 | 3.9 | 39.6 | 22.8 | 11.0 |
| R32 | Mass% | 0.0 | 10.0 | 18.2 | 27.6 | 36.7 | 0.0 | 10.0 | 18.1 |
| R1234yf | Mass% | 41.7 | 49.5 | 54.1 | 57.5 | 59.4 | 60.4 | 67.2 | 70.9 |
| GWP | - | 2 | 70 | 125 | 189 | 250 | 3 | 70 | 125 |
| COP Ratio | %(relative to R410A) | 100.3 | 100.3 | 100.7 | 101.2 | 101. 9 | 101.4 | 101.8 | 102.3 |
| Refrigerating Capacity Ratio | %(relative to R410A) | 80.0 | 80.0 | 80.0 | 80.0 | 80.0 | 70.0 | 70.0 | 70.0 |

| | | | | | | | | | |
|---|---|---|---|---|---|---|---|---|---|
| *examples labelled by an asterisk (*) are not according to the invention | | | | | | | | | |

**Table 7**

| Item | Unit | Comparative Example 13 | Example 11* | Example 12* | Example 13* | Example 14* | Example 15* | Example 16* | Example 17* |
|---|---|---|---|---|---|---|---|---|---|
| | | I | | J | | K | | L | Q |
| HFO-1132 (E) | Mass% | 72.0 | 57.2 | 48.5 | 41.2 | 35.6 | 32.0 | 28.9 | 44.6 |
| R32 | Mass% | 0.0 | 10.0 | 18.3 | 27.6 | 36.8 | 44.2 | 51.7 | 23.0 |
| R1234yf | Mass% | 28.0 | 32.8 | 33.2 | 31.2 | 27.6 | 23.8 | 19.4 | 32.4 |
| GWP | - | 2 | 69 | 125 | 188 | 250 | 300 | 350 | 157 |
| COP Ratio | % (relative to R410A) | 99.9 | 99.5 | 99.4 | 99.5 | 99.6 | 99.8 | 100.1 | 99.4 |
| Refrigerating Capacity Ratio | % (relative to R410A) | 86.6 | 88.4 | 90.9 | 94.2 | 97.7 | 100.5 | 103.3 | 92.5 |

| | | | | | | | | | |
|---|---|---|---|---|---|---|---|---|---|
| *examples labelled by an asterisk (*) are not according to the invention | | | | | | | | | |

**Table 8**

| Item | Unit | Comparative Example 14 | Example 18 | Example 19 | Example 20 | Example 21 | Example 22* |
|---|---|---|---|---|---|---|---|
| | | M | | W | | N | |
| HFO-1132 (E) | Mass% | 52.6 | 39.2 | 32.4 | 29.3 | 27.7 | 24.5 |
| R32 | Mass% | 0.0 | 5.0 | 10.0 | 14.5 | 18.2 | 27.6 |
| R1234yf | Mass% | 47.4 | 55.8 | 57.6 | 56.2 | 54.1 | 47.9 |
| GWP | - | 2 | 36 | 70 | 100 | 125 | 188 |
| COP Ratio | %(relative to R410A) | 100.5 | 100.9 | 100.9 | 100.8 | 100.7 | 100.4 |
| Refrigerating Capacity Ratio | % (relative to R410A) | 77.1 | 74.8 | 75.6 | 77.8 | 80.0 | 85.5 |

| | | | | | | | |
|---|---|---|---|---|---|---|---|
| *examples labelled by an asterisk (*) are not according to the invention | | | | | | | |

**Table 9**

| Item | Unit | Example 23* | Example 24* | Example 25* | Example 26* |
|---|---|---|---|---|---|
| | | O | | P | s |
| HFO-1132 (E) | Mass% | 22.6 | 21.2 | 20.5 | 21.9 |
| R32 | Mass% | 36.8 | 44.2 | 51.7 | 39.7 |
| R1234yf | Mass% | 40.6 | 34.6 | 27.8 | 38.4 |
| GWP | - | 250 | 300 | 350 | 270 |
| COP Ratio | %(relative to R410A) | 100.4 | 100.5 | 100.6 | 100.4 |
| Refrigerating Capacity Ratio | %(relative to R410A) | 91.0 | 95.0 | 99.1 | 92.5 |

| | | | | | |
|---|---|---|---|---|---|
| *examples labelled by an asterisk (*) are not according to the invention | | | | | |

**Table 10**

| Item | Unit | Comp.Ex. 15 | Comp.Ex. 16 | Comp.Ex. 17 | Comp.Ex. 18 | Example 27* | Example 28* | Comp.Ex. 19 | Comp.Ex. 20 |
|---|---|---|---|---|---|---|---|---|---|
| HFO-1132 (E) | Mass% | 10.0 | 20.0 | 30.0 | 40.0 | 50.0 | 60.0 | 70.0 | 80.0 |
| R32 | Mass% | 5.0 | 5.0 | 5.0 | 5.0 | 5.0 | 5.0 | 5.0 | 5.0 |
| R1234yf | Mass% | 85.0 | 75.0 | 65.0 | 55.0 | 45.0 | 35.0 | 25.0 | 15.0 |
| GWP | - | 37 | 37 | 37 | 36 | 36 | 36 | 35 | 35 |
| COP Ratio | %(relative to R410A) | 103.4 | 102.6 | 101.6 | 100.8 | 100.2 | 99.8 | 99.6 | 99.4 |
| Refrigerating Capacity Ratio | %(relative to R410A) | 56.4 | 63.3 | 69.5 | 75.2 | 80.5 | 85.4 | 90.1 | 94.4 |

| | | | | | | | | | |
|---|---|---|---|---|---|---|---|---|---|
| *examples labelled by an asterisk (*) are not according to the invention | | | | | | | | | |

**Table 11**

| Item | Unit | Comp. Ex.21 | Comp. Ex. 22 | Example 29 | Comp. Ex. 23 | Example 30* | Comp. Ex. 24 | Comp. Ex. 25 | Comp. Ex. 26 |
|---|---|---|---|---|---|---|---|---|---|
| HFO-1132 (E) | Mass% | 10.0 | 20.0 | 30.0 | 40.0 | 50.0 | 60.0 | 70.0 | 80.0 |
| R32 | Mass% | 10.0 | 10.0 | 10.0 | 10.0 | 10.0 | 10.0 | 10.0 | 10.0 |
| R1234yf | Mass% | 80.0 | 70.0 | 60.0 | 50.0 | 40.0 | 30.0 | 20.0 | 10.0 |
| GWP | - | 71 | 71 | 70 | 70 | 70 | 69 | 69 | 69 |
| COP Ratio | % (relative to R410A) | 103.1 | 102.1 | 101.1 | 100.4 | 99.8 | 99.5 | 99.2 | 99.1 |
| Refrigerating Capacity Ratio | % (relative to R410A) | 61.8 | 68.3 | 74.3 | 79.7 | 84.9 | 89.7 | 94.2 | 98.4 |

| | | | | | | | | | |
|---|---|---|---|---|---|---|---|---|---|
| *examples labelled by an asterisk (*) are not according to the invention | | | | | | | | | |

**Table 12**

| Item | Unit | Comp. Ex. 27 | Example 31 | Comp. Ex. 28 | Example 32* | Example 33* | Comp. Ex. 29 | Comp. Ex. 30 | Comp. Ex. 31 |
|---|---|---|---|---|---|---|---|---|---|
| HFO-1132 (E) | Mass% | 10.0 | 20.0 | 30.0 | 40.0 | 50.0 | 60.0 | 70.0 | 80.0 |
| R32 | Mass% | 15.0 | 15.0 | 15.0 | 15.0 | 15.0 | 15.0 | 15.0 | 15.0 |
| R1234yf | Mass% | 75.0 | 65.0 | 55.0 | 45.0 | 35.0 | 25.0 | 15.0 | 5.0 |
| GWP | - | 104 | 104 | 104 | 103 | 103 | 103 | 103 | 102 |
| COP Ratio | %(relative to R410A) | 102.7 | 101.6 | 100.7 | 100.0 | 99.5 | 99.2 | 99.0 | 98.9 |
| Refrigerating Capacity Ratio | %(relative to R410A) | 66.6 | 72.9 | 78.6 | 84.0 | 89.0 | 93.7 | 98.1 | 102.2 |

**Table 13**

| Item | Unit | Comp. Ex. 32 | Comp. Ex. 33 | Compo. Ex. 34 | Comp. Ex. 35 | Comp. Ex. 36 | Comp. Ex. 37 | Comp. Ex. 38 | Comp. Ex. 39 |
|---|---|---|---|---|---|---|---|---|---|
| HFO-1132 (E) | Mass% | 10.0 | 20.0 | 30.0 | 40.0 | 50.0 | 60.0 | 70.0 | 10.0 |
| R32 | Mass% | 20.0 | 20.0 | 20.0 | 20.0 | 20.0 | 20.0 | 20.0 | 25.0 |
| R1234yf | Mass% | 70.0 | 60.0 | 50.0 | 40.0 | 30.0 | 20.0 | 10.0 | 65.0 |
| GWP | - | 138 | 138 | 137 | 137 | 137 | 136 | 136 | 171 |
| COP Ratio | %(relative to R410A) | 102.3 | 101.2 | 100.4 | 99.7 | 99.3 | 99.0 | 98.8 | 101.9 |
| Refrigerating Capacity Ratio | %(relative to R410A) | 71.0 | 77.1 | 82.7 | 88.0 | 92.9 | 97.5 | 101.7 | 75.0 |

| | | | | | | | | | |
|---|---|---|---|---|---|---|---|---|---|
| *examples labelled by an asterisk (*) are not according to the invention | | | | | | | | | |

**Table 14**

| Item | Unit | Example 34* | Comp. Ex. 40 | Compo. Ex.41 | Comp. Ex. 42 | Comp. Ex. 43 | Comp. Ex. 44 | Comp. Ex. 45 | Example 35* |
|---|---|---|---|---|---|---|---|---|---|
| HFO-1132 (E) | Mass% | 20.0 | 30.0 | 40.0 | 50.0 | 60.0 | 70.0 | 10.0 | 20.0 |
| R32 | Mass% | 25.0 | 25.0 | 25.0 | 25.0 | 25.0 | 25.0 | 30.0 | 30.0 |
| R1234yf | Mass% | 55.0 | 45.0 | 35.0 | 25.0 | 15.0 | 5.0 | 60.0 | 50.0 |
| GWP | - | 171 | 171 | 171 | 170 | 170 | 170 | 205 | 205 |
| COP Ratio | %(relative to R410A) | 100.9 | 100.1 | 99.6 | 99.2 | 98.9 | 98.7 | 101.6 | 100.7 |
| Refrigerating Capacity Ratio | %(relative to R410A) | 81.0 | 86.6 | 91.7 | 96.5 | 101.0 | 105.2 | 78.9 | 84.8 |

| | | | | | | | | | |
|---|---|---|---|---|---|---|---|---|---|
| *examples labelled by an asterisk (*) are not according to the invention | | | | | | | | | |

**Table 15**

| Item | Unit | Comp. Ex. 46 | Comp. Ex. 47 | Comp. Ex. 48 | Comp. Ex. 49 | Example 36* | Example 37* | Example 38* | Comp. Ex. 50 |
|---|---|---|---|---|---|---|---|---|---|
| HFO-1132 (E) | Mass% | 30.0 | 40.0 | 50.0 | 60.0 | 10.0 | 20.0 | 30.0 | 40.0 |
| R32 | Mass% | 30.0 | 30.0 | 30.0 | 30.0 | 35.0 | 35.0 | 35.0 | 35.0 |
| R1234yf | Mass% | 40.0 | 30.0 | 20.0 | 10.0 | 55.0 | 45.0 | 35.0 | 25.0 |
| GWP | - | 204 | 204 | 204 | 204 | 239 | 238 | 238 | 238 |
| COP Ratio | %(relative to R410A) | 100.0 | 99.5 | 99.1 | 98.8 | 101.4 | 100.6 | 99.9 | 99.4 |
| Refrigerating Capacity Ratio | %(relative to R410A) | 90.2 | 95.3 | 100.0 | 104.4 | 82.5 | 88.3 | 93.7 | 98.6 |

| | | | | | | | | | |
|---|---|---|---|---|---|---|---|---|---|
| *examples labelled by an asterisk (*) are not according to the invention | | | | | | | | | |

**Table 16**

| Item | Unit | Comp. Ex. 51 | Comp. Ex. 52 | Comp. Ex. 53 | Comp. Ex.54 | Example 39* | Comp. Ex. 55 | Comp. Ex. 56 | Comp. Ex. 57 |
|---|---|---|---|---|---|---|---|---|---|
| HFO-1132 (E) | Mass% | 50.0 | 60.0 | 10.0 | 20.0 | 30.0 | 40.0 | 50.0 | 10.0 |
| R32 | Mass% | 35.0 | 35.0 | 40.0 | 40.0 | 40.0 | 40.0 | 40.0 | 45.0 |
| R1234yf | Mass% | 15.0 | 5.0 | 50.0 | 40.0 | 30.0 | 20.0 | 10.0 | 45.0 |
| GWP | - | 237 | 237 | 272 | 272 | 272 | 271 | 271 | 306 |
| COP Ratio | %(relative to R410A) | 99.0 | 98.8 | 101.3 | 100.6 | 99.9 | 99.4 | 99.0 | 101.3 |
| Refrigerating Capacity Ratio | %(relative to R410A) | 103.2 | 107.5 | 86.0 | 91.7 | 96.9 | 101.8 | 106.3 | 89.3 |

| | | | | | | | | | |
|---|---|---|---|---|---|---|---|---|---|
| *examples labelled by an asterisk (*) are not according to the invention | | | | | | | | | |

**Table 17**

| Item | Unit | Example 40* | Example 41* | Compo. Ex. 58 | Comp. Ex.59 | Comp. Ex. 60 | Example 42* | Comp. Ex. 61 | Comp. Ex. 62 |
|---|---|---|---|---|---|---|---|---|---|
| HFO-1132 (E) | Mass% | 20.0 | 30.0 | 40.0 | 50.0 | 10.0 | 20.0 | 30.0 | 40.0 |
| R32 | Mass% | 45.0 | 45.0 | 45.0 | 45.0 | 50.0 | 50.0 | 50.0 | 50.0 |
| R1234yf | Mass% | 35.0 | 25.0 | 15.0 | 5.0 | 40.0 | 30.0 | 20.0 | 10.0 |
| GWP | - | 305 | 305 | 305 | 304 | 339 | 339 | 339 | 338 |
| COP Ratio | %(relative to R410A) | 100.6 | 100.0 | 99.5 | 99.1 | 101.3 | 100.6 | 100.0 | 99.5 |
| Refrigerating Capacity Ratio | %(relative to R410A) | 94.9 | 100.0 | 104.7 | 109.2 | 92.4 | 97.8 | 102.9 | 107.5 |

| | | | | | | | | | |
|---|---|---|---|---|---|---|---|---|---|
| *examples labelled by an asterisk (*) are not according to the invention | | | | | | | | | |

**Table 18**

| Item | Unit | Comp. Ex. 63 | Comp. Ex. 64 | Comp. Ex. 65 | Comp. Ex. 66 | Example 43* | Example 44* | Example 45* | Example 46* |
|---|---|---|---|---|---|---|---|---|---|
| HFO-1132 (E) | Mass% | 10.0 | 20.0 | 30.0 | 40.0 | 56.0 | 59.0 | 62.0 | 65.0 |
| R32 | Mass% | 55.0 | 55.0 | 55.0 | 55.0 | 3.0 | 3.0 | 3.0 | 3.0 |
| R1234yf | Mass% | 35.0 | 25.0 | 15.0 | 5.0 | 41.0 | 38.0 | 35.0 | 32.0 |
| GWP | - | 373 | 372 | 372 | 372 | 22 | 22 | 22 | 22 |
| COP Ratio | %(relative to R410A) | 101.4 | 100.7 | 100.1 | 99.6 | 100.1 | 100.0 | 99.9 | 99.8 |
| Refrigerating Capacity Ratio | %(relative to R410A) | 95.3 | 100.6 | 105.6 | 110.2 | 81.7 | 83.2 | 84.6 | 86.0 |

| | | | | | | | | | |
|---|---|---|---|---|---|---|---|---|---|
| *examples labelled by an asterisk (*) are not according to the invention | | | | | | | | | |

**Table 19**

| Item | Unit | Example 47* | Example 48* | Example 49* | Example 50* | Example 51* | Example 52* | Example 53* | Example 54* |
|---|---|---|---|---|---|---|---|---|---|
| HFO-1132 (E) | Mass% | 49.0 | 52.0 | 55.0 | 58.0 | 61.0 | 43.0 | 46.0 | 49.0 |
| R32 | Mass% | 6.0 | 6.0 | 6.0 | 6.0 | 6.0 | 9.0 | 9.0 | 9.0 |
| R1234yf | Mass% | 45.0 | 42.0 | 39.0 | 36.0 | 33.0 | 48.0 | 45.0 | 42.0 |
| GWP | - | 43 | 43 | 43 | 43 | 42 | 63 | 63 | 63 |
| COP Ratio | %(relative to R410A) | 100.2 | 100.0 | 99.9 | 99.8 | 99.7 | 100.3 | 100.1 | 99.9 |
| Refrigerating Capacity Ratio | %(relative to R410A) | 80.9 | 82.4 | 83.9 | 85.4 | 86.8 | 80.4 | 82.0 | 83.5 |

| | | | | | | | | | |
|---|---|---|---|---|---|---|---|---|---|
| *examples labelled by an asterisk (*) are not according to the invention | | | | | | | | | |

**Table 20**

| Item | Unit | Example 55* | Example 56* | Example 57* | Example 58* | Example 59* | Example 60* | Example 61* | Example 62* |
|---|---|---|---|---|---|---|---|---|---|
| HFO-1132 (E) | Mass% | 52.0 | 55.0 | 58.0 | 38.0 | 41.0 | 44.0 | 47.0 | 50.0 |
| R32 | Mass% | 9.0 | 9.0 | 9.0 | 12.0 | 12.0 | 12.0 | 12.0 | 12.0 |
| R1234yf | Mass% | 39.0 | 36.0 | 33.0 | 50.0 | 47.0 | 44.0 | 41.0 | 38.0 |
| GWP | - | 63 | 63 | 63 | 83 | 83 | 83 | 83 | 83 |
| COP Ratio | % (relative to R410A) | 99.8 | 99.7 | 99.6 | 100.3 | 100.1 | 100.0 | 99.8 | 99.7 |
| Refrigerating Capacity Ratio | %(relative to R410A) | 85.0 | 86.5 | 87.9 | 80.4 | 82.0 | 83.5 | 85.1 | 86.6 |

| | | | | | | | | | |
|---|---|---|---|---|---|---|---|---|---|
| *examples labelled by an asterisk (*) are not according to the invention | | | | | | | | | |

**Table 21**

| Item | Unit | Example 63* | Example 64* | Example 65* | Example 66* | Example 67* | Example 68* | Example 69* | Example 70* |
|---|---|---|---|---|---|---|---|---|---|
| HFO-1132 (E) | Mass% | 53.0 | 33.0 | 36.0 | 39.0 | 42.0 | 45.0 | 48.0 | 51.0 |
| R32 | Mass% | 12.0 | 15.0 | 15.0 | 15.0 | 15.0 | 15.0 | 15.0 | 15.0 |
| R1234yf | Mass% | 35.0 | 52.0 | 49.0 | 46.0 | 43.0 | 40.0 | 37.0 | 34.0 |
| GWP | - | 83 | 104 | 104 | 103 | 103 | 103 | 103 | 103 |
| COP Ratio | %(relative to R410A) | 99.6 | 100.5 | 100.3 | 100.1 | 99.9 | 99.7 | 99.6 | 99.5 |
| Refrigerating Capacity Ratio | %(relative to R410A) | 88.0 | 80.3 | 81.9 | 83.5 | 85.0 | 86.5 | 88.0 | 89.5 |

| | | | | | | | | | |
|---|---|---|---|---|---|---|---|---|---|
| *examples labelled by an asterisk (*) are not according to the invention | | | | | | | | | |

**Table 22**

| Item | Unit | Example 71* | Example 72* | Example 73* | Example 74* | Example 75* | Example 76* | Example 77* | Example 78 |
|---|---|---|---|---|---|---|---|---|---|
| HFO-1132 (E) | Mass% | 29.0 | 32.0 | 35.0 | 38.0 | 41.0 | 44.0 | 47.0 | 36.0 |
| R32 | Mass% | 18.0 | 18.0 | 18.0 | 18.0 | 18.0 | 18.0 | 18.0 | 3.0 |
| R1234yf | Mass% | 53.0 | 50.0 | 47.0 | 44.0 | 41.0 | 38.0 | 35.0 | 61.0 |
| GWP | - | 124 | 124 | 124 | 124 | 124 | 123 | 123 | 23 |
| COP Ratio | % (relative to R410A) | 100.6 | 100.3 | 100.1 | 99.9 | 99.8 | 99.6 | 99.5 | 101.3 |
| Refrigerating Capacity Ratio | % (relative to R410A) | 80.6 | 82.2 | 83.8 | 85.4 | 86.9 | 88.4 | 89.9 | 71.0 |

| | | | | | | | | | |
|---|---|---|---|---|---|---|---|---|---|
| *examples labelled by an asterisk (*) are not according to the invention | | | | | | | | | |

**Table 23**

| Item | Unit | Example 79 | Example 80 | Example 81 | Example 82 | Example 83 | Example 84 | Example 85 | Example 86 |
|---|---|---|---|---|---|---|---|---|---|
| HFO-1132 (E) | Mass% | 39.0 | 42.0 | 30.0 | 33.0 | 36.0 | 26.0 | 29.0 | 32.0 |
| R32 | Mass% | 3.0 | 3.0 | 6.0 | 6.0 | 6.0 | 9.0 | 9.0 | 9.0 |
| R1234yf | Mass% | 58.0 | 55.0 | 64.0 | 61.0 | 58.0 | 65.0 | 62.0 | 59.0 |
| GWP | - | 23 | 23 | 43 | 43 | 43 | 64 | 64 | 63 |
| COP Ratio | %(relative to R410A) | 101.1 | 100.9 | 101.5 | 101.3 | 101.0 | 101.6 | 101.3 | 101.1 |
| Refrigerating Capacity Ratio | %(relative to R410A) | 72.7 | 74.4 | 70.5 | 72.2 | 73.9 | 71.0 | 72.8 | 74.5 |

| | | | | | | | | | |
|---|---|---|---|---|---|---|---|---|---|
| *examples labelled by an asterisk (*) are not according to the invention | | | | | | | | | |

**Table 24**

| Item | Unit | Example 87 | Example 88 | Example 89 | Example 90 | Example 91 | Example 92 | Example 93 | Example 94 |
|---|---|---|---|---|---|---|---|---|---|
| HFO-1132 (E) | Mass% | 21.0 | 24.0 | 27.0 | 30.0 | 16.0 | 19.0 | 22.0 | 25.0 |
| R32 | Mass% | 12.0 | 12.0 | 12.0 | 12.0 | 15.0 | 15.0 | 15.0 | 15.0 |
| R1234yf | Mass% | 67.0 | 64.0 | 61.0 | 58.0 | 69.0 | 66.0 | 63.0 | 60.0 |
| GWP | - | 84 | 84 | 84 | 84 | 104 | 104 | 104 | 104 |
| COP Ratio | %(relative to R410A) | 101.8 | 101.5 | 101.2 | 101.0 | 102.1 | 101.8 | 101.4 | 101.2 |
| Refrigerating Capacity Ratio | %(relative to R410A) | 70.8 | 72.6 | 74.3 | 76.0 | 70.4 | 72.3 | 74.0 | 75.8 |

| | | | | | | | | | |
|---|---|---|---|---|---|---|---|---|---|
| *examples labelled by an asterisk (*) are not according to the invention | | | | | | | | | |

**Table 25**

| Item | Unit | Example 95 | Example 96 | Example 97 | Example 98 | Example 99 | Example 100 | Example 101 | Example 102* |
|---|---|---|---|---|---|---|---|---|---|
| HFO-1132 (E) | Mass% | 28.0 | 12.0 | 15.0 | 18.0 | 21.0 | 24.0 | 27.0 | 25.0 |
| R32 | Mass% | 15.0 | 18.0 | 18.0 | 18.0 | 18.0 | 18.0 | 18.0 | 21.0 |
| R1234yf | Mass% | 57.0 | 70.0 | 67.0 | 64.0 | 61.0 | 58.0 | 55.0 | 54.0 |
| GWP | - | 104 | 124 | 124 | 124 | 124 | 124 | 124 | 144 |
| COP Ratio | %(relative to R410A) | 100.9 | 102.2 | 101.9 | 101.6 | 101.3 | 101.0 | 100.7 | 100.7 |
| Refrigerating Capacity Ratio | %(relative to R410A) | 77.5 | 70.5 | 72.4 | 74.2 | 76.0 | 77.7 | 79.4 | 80.7 |

| | | | | | | | | | |
|---|---|---|---|---|---|---|---|---|---|
| *examples labelled by an asterisk (*) are not according to the invention | | | | | | | | | |

**Table 26**

| Item | Unit | Example 103* | Example 104* | Example 105* | Example 106* | Example 107* | Example 108* | Example 109* | Example 110* |
|---|---|---|---|---|---|---|---|---|---|
| HFO-1132 (E) | Mass% | 21.0 | 24.0 | 17.0 | 20.0 | 23.0 | 13.0 | 16.0 | 19.0 |
| R32 | Mass% | 24.0 | 24.0 | 27.0 | 27.0 | 27.0 | 30.0 | 30.0 | 30.0 |
| R1234yf | Mass% | 55.0 | 52.0 | 56.0 | 53.0 | 50.0 | 57.0 | 54.0 | 51.0 |
| GWP | - | 164 | 164 | 185 | 185 | 184 | 205 | 205 | 205 |
| COP Ratio | %(relative to R410A) | 100.9 | 100.6 | 101.1 | 100.8 | 100.6 | 101.3 | 101.0 | 100.8 |
| Refrigerating Capacity Ratio | %(relative to R410A) | 80.8 | 82.5 | 80.8 | 82.5 | 84.2 | 80.7 | 82.5 | 84.2 |

| | | | | | | | | | |
|---|---|---|---|---|---|---|---|---|---|
| *examples labelled by an asterisk (*) are not according to the invention | | | | | | | | | |

**Table 27**

| Item | Unit | Example 111* | Example 112* | Example 113* | Example 114* | Example 115* | Example 116* | Example 117* | Example 118* |
|---|---|---|---|---|---|---|---|---|---|
| HFO-1132 (E) | Mass% | 22.0 | 9.0 | 12.0 | 15.0 | 18.0 | 21.0 | 8.0 | 12.0 |
| R32 | Mass% | 30.0 | 33.0 | 33.0 | 33.0 | 33.0 | 33.0 | 36.0 | 36.0 |
| R1234yf | Mass% | 48.0 | 58.0 | 55.0 | 52.0 | 49.0 | 46.0 | 56.0 | 52.0 |
| GWP | - | 205 | 225 | 225 | 225 | 225 | 225 | 245 | 245 |
| COP Ratio | %(relative to R410A) | 100.5 | 101.6 | 101.3 | 101.0 | 100.8 | 100.5 | 101.6 | 101.2 |
| Refrigerating Capacity Ratio | %(relative to R410A) | 85.9 | 80.5 | 82.3 | 84.1 | 85.8 | 87.5 | 82.0 | 84.4 |

| | | | | | | | | | |
|---|---|---|---|---|---|---|---|---|---|
| *examples labelled by an asterisk (*) are not according to the invention | | | | | | | | | |

**Table 28**

| Item | Unit | Example 119* | Example 120* | Example 121* | Example 122* | Example 123* | Example 124* | Example 125* | Example 126* |
|---|---|---|---|---|---|---|---|---|---|
| HFO-1132 (E) | Mass% | 15.0 | 18.0 | 21.0 | 42.0 | 39.0 | 34.0 | 37.0 | 30.0 |
| R32 | Mass% | 36.0 | 36.0 | 36.0 | 25.0 | 28.0 | 31.0 | 31.0 | 34.0 |
| R1234yf | Mass% | 49.0 | 46.0 | 43.0 | 33.0 | 33.0 | 35.0 | 32.0 | 36.0 |
| GWP | - | 245 | 245 | 245 | 170 | 191 | 211 | 211 | 231 |
| COP Ratio | %(relative to R410A) | 101.0 | 100.7 | 100.5 | 99.5 | 99.5 | 99.8 | 99.6 | 99.9 |
| Refrigerating Capacity Ratio | %(relative to R410A) | 86.2 | 87.9 | 89.6 | 92.7 | 93.4 | 93.0 | 94.5 | 93.0 |

| | | | | | | | | | |
|---|---|---|---|---|---|---|---|---|---|
| *examples labelled by an asterisk (*) are not according to the invention | | | | | | | | | |

**Table 29**

| Item | Unit | Example 127* | Example 128* | Example 129* | Example 130* | Example 131* | Example 132* | Example 133* | Example 134* |
|---|---|---|---|---|---|---|---|---|---|
| HFO-1132 (E) | Mass% | 33.0 | 36.0 | 24.0 | 27.0 | 30.0 | 33.0 | 23.0 | 26.0 |
| R32 | Mass% | 34.0 | 34.0 | 37.0 | 37.0 | 37.0 | 37.0 | 40.0 | 40.0 |
| R1234yf | Mass% | 33.0 | 30.0 | 39.0 | 36.0 | 33.0 | 30.0 | 37.0 | 34.0 |
| GWP | - | 231 | 231 | 252 | 251 | 251 | 251 | 272 | 272 |
| COP Ratio | %(relative to R410A) | 99.8 | 99.6 | 100.3 | 100.1 | 99.9 | 99.8 | 100.4 | 100.2 |
| Refrigerating Capacity Ratio | %(relative to R410A) | 94.5 | 96.0 | 91.9 | 93.4 | 95.0 | 96.5 | 93.3 | 94.9 |

| | | | | | | | | | |
|---|---|---|---|---|---|---|---|---|---|
| *examples labelled by an asterisk (*) are not according to the invention | | | | | | | | | |

**Table 30**

| Item | Unit | Example 135* | Example 136* | Example 137* | Example 138* | Example 139* | Example 140* | Example 141* | Example 142* |
|---|---|---|---|---|---|---|---|---|---|
| HFO-1132 (E) | Mass% | 29.0 | 32.0 | 19.0 | 22.0 | 25.0 | 28.0 | 31.0 | 18.0 |
| R32 | Mass% | 40.0 | 40.0 | 43.0 | 43.0 | 43.0 | 43.0 | 43.0 | 46.0 |
| R1234yf | Mass% | 31.0 | 28.0 | 38.0 | 35.0 | 32.0 | 29.0 | 26.0 | 36.0 |
| GWP | - | 272 | 271 | 292 | 292 | 292 | 292 | 292 | 312 |
| COP Ratio | %(relative to R410A) | 100.0 | 99.8 | 100.6 | 100.4 | 100.2 | 100.1 | 99.9 | 100.7 |
| Refrigerating Capacity Ratio | %(relative to R410A) | 96.4 | 97.9 | 93.1 | 94.7 | 96.2 | 97.8 | 99.3 | 94.4 |

| | | | | | | | | | |
|---|---|---|---|---|---|---|---|---|---|
| *examples labelled by an asterisk (*) are not according to the invention | | | | | | | | | |

**Table 31**

| Item | Unit | Example 143* | Example 144* | Example 145* | Example 146* | Example 147* | Example 148* | Example 149* | Example 150* |
|---|---|---|---|---|---|---|---|---|---|
| HFO-1132 (E) | Mass% | 21.0 | 23.0 | 26.0 | 29.0 | 13.0 | 16.0 | 19.0 | 22.0 |
| R32 | Mass% | 46.0 | 46.0 | 46.0 | 46.0 | 49.0 | 49.0 | 49.0 | 49.0 |
| R1234yf | Mass% | 33.0 | 31.0 | 28.0 | 25.0 | 38.0 | 35.0 | 32.0 | 29.0 |
| GWP | - | 312 | 312 | 312 | 312 | 332 | 332 | 332 | 332 |
| COP Ratio | % (relative to R410A) | 100.5 | 100.4 | 100.2 | 100.0 | 101.1 | 100.9 | 100.7 | 100.5 |
| Refrigerating Capacity Ratio | % (relative to R410A) | 96.0 | 97.0 | 98.6 | 100.1 | 93.5 | 95.1 | 96.7 | 98.3 |

| | | | | | | | | | |
|---|---|---|---|---|---|---|---|---|---|
| *examples labelled by an asterisk (*) are not according to the invention | | | | | | | | | |

**Table 32**

| Item | Unit | Example 151* | Example 152* |
|---|---|---|---|
| HFO-1132 (E) | Mass% | 25.0 | 28.0 |
| R32 | Mass% | 49.0 | 49.0 |
| R1234yf | Mass% | 26.0 | 23.0 |
| GWP | - | 332 | 332 |
| COP Ratio | %(relative to R410A) | 100.3 | 100.1 |
| Refrigerating Capacity Ratio | %(relative to R410A) | 99.8 | 101.3 |

| | | | |
|---|---|---|---|
| *examples labelled by an asterisk (*) are not according to the invention | | | |

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments IJ, JN, NE, and EI that connect the following 4 points:
point I (72.0, 0.0, 28.0),
point J (48.5, 18.3, 33.2),
point N (27.7, 18.2, 54.1), and
point E (58.3, 0.0, 41.7),
or on these line segments (excluding the points on the line segment EI),
   the line segment IJ is represented by coordinates (0.0236y²-1.7616y+72.0, y, -0.0236y²+0.7616y+28.0),
   the line segment NE is represented by coordinates (0.012y²-1.9003y+58.3, y, -0.012y²+0.9003y+41.7), and
   the line segments JN and EI are straight lines, the refrigerant has a refrigerating capacity ratio of 80% or more relative to R410A, a GWP of 125 or less, and a WCF lower flammability. These results pertain to reference embodiments.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:
point M (52.6, 0.0, 47.4),
point M' (39.2, 5.0, 55.8),
point N (27.7, 18.2, 54.1),
point V (11.0, 18.1, 70.9), and
point G (39.6, 0.0, 60.4),
or on these line segments (excluding the points on the line segment GM),
   the line segment MM' is represented by coordinates (0.132y²-3.34y+52.6, y, -0.132y²+2.34y+47.4),
   the line segment M'N is represented by coordinates (0.0596y²-2.2541y+48.98, y, -0.0596y²+1.2541y+51.02),
   the line segment VG is represented by coordinates (0.0123y²-1.8033y+39.6, y, -0.0123y²+0.8033y+60.4), and
   the line segments NV and GM are straight lines, the refrigerant according to the present disclosure has a refrigerating capacity ratio of 70% or more relative to R410A, a GWP of 125 or less, and an ASHRAE lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments ON, NU, and UO that connect the following 3 points:
point O (22.6, 36.8, 40.6),
point N (27.7, 18.2, 54.1), and
point U (3.9, 36.7, 59.4),
or on these line segments,
   the line segment ON is represented by coordinates (0.0072y²-0.6701y+37.512, y, -0.0072y²-0.3299y+62.488),
   the line segment NU is represented by coordinates (0.0083y²-1.7403y+56.635, y, -0.0083y²+0.7403y+43.365), and
   the line segment UO is a straight line, the refrigerant according to the present disclosure has a refrigerating capacity ratio of 80% or more relative to R410A, a GWP of 250 or less, and an ASHRAE lower flammability.

The results also indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments QR, RT, TL, LK, and KQ that connect the following 5 points:
point Q (44.6, 23.0, 32.4),
point R (25.5, 36.8, 37.7),
point T (8.6, 51.6, 39.8),
point L (28.9, 51.7, 19.4), and
point K (35.6, 36.8, 27.6),
or on these line segments,
the line segment QR is represented by coordinates (0.0099y²-1.975y+84.765, y, -0.0099y²+0.975y+15.235),
the line segment RT is represented by coordinates (0.0082y²-1.8683y+83.126, y, -0.0082y²+0.8683y+16.874),
the line segment LK is represented by coordinates (0.0049y²-0.8842y+61.488, y, -0.0049y²-0.1158y+38.512),
the line segment KQ is represented by coordinates (0.0095y²-1.2222y+67.676, y, -0.0095y²+0.2222y+32.324), and
the line segment TL is a straight line, the refrigerant according to the present disclosure has a refrigerating capacity ratio of 92.5% or more relative to R410A, a GWP of 350 or less, and a WCF lower flammability. These results pertain to reference embodiments.

The results further indicate that under the condition that the mass% of HFO-1132(E), R32, and R1234yf based on their sum is respectively represented by x, y, and z, when coordinates (x,y,z) in a ternary composition diagram in which the sum of HFO-1132(E), R32, and R1234yf is 100 mass% are within the range of a figure surrounded by line segments PS, ST, and TP that connect the following 3 points:
point P (20.5, 51.7, 27.8),
point S (21.9, 39.7, 38.4), and
point T (8.6, 51.6, 39.8),
or on these line segments,
   the line segment PS is represented by coordinates (0.0064y²-0.7103y+40.1, y, -0.0004y²-0.2897y+59.9),
   the line segment ST is represented by coordinates (0.0082y²-1.8683y+83.126, y, -0.0082y²+0.8683y+16.874), and
   the line segment TP is a straight line, the refrigerant according to the present disclosure has a refrigerating capacity ratio of 92.5% or more relative to R410A, a GWP of 350 or less, and an ASHRAE lower flammability. These results pertain to reference embodiments.

### Description of the Reference Numerals

1: Sample cell
2: High-speed camera
3: Xenon lamp
4: Collimating lens
5: Collimating lens
6: Ring filter

## Claims

1. A composition comprising a refrigerant,
the refrigerant comprising trans-1,2-difluoroethylene (HFO-1132(E)), difluoromethane(R32), and 2, 3,3, 3-tetrafluoro-1-propene (R1234yf),
wherein
when the mass% of HFO-1132(E), R32, and R1234yf based on their sum in the refrigerant is respectively represented by x, y, and z, coordinates (x,y,z) in a ternary composition diagram in which the sum of HFO-1132(E), R32, and R1234yf is 100 mass% are within the range of a figure surrounded by line segments MM', M'N, NV, VG, and GM that connect the following 5 points:
point M (52.6, 0.0, 47.4),
point M' (39.2, 5.0, 55.8),
point N (27.7, 18.2, 54.1),
point V (11.0, 18.1, 70.9), and
point G (39.6, 0.0, 60.4),
or on these line segments (excluding the points on the line segment GM);
the line segment MM' is represented by coordinates (0.132y²-3.34y+52.6, y, -0.132y²+2.34y+47.4);
the line segment M'N is represented by coordinates (0.0596y²-2.2541y+48.98, y, -0.0596y²+1.2541y+51.02);
the line segment VG is represented by coordinates (0.0123y²-1.8033y+39.6, y, -0.0123y²+0.8033y+60.4); and
the line segments NV and GM are straight lines.

2. The composition according to claim 1, for use as a working fluid for a refrigerating machine, wherein the composition further comprises a refrigeration oil.

3. The composition according to claim 1 or 2, for use as an alternative refrigerant for R410A.

4. Use of the composition according to claim 1 or 2 as an alternative refrigerant for R410A.

5. A refrigerating machine comprising the composition according to claim 1 or 2 as a working fluid.

6. A method for operating a refrigerating machine, comprising the step of circulating the composition according to claim 1 or 2 as a working fluid in a refrigerating machine.

## Patentansprüche

1. Zusammensetzung, umfassend ein Kältemittel,
wobei das Kältemittel trans-1,2-Difluorethylen (HFO-1132(E)), Difluormethan (R32) und 2,3,3,3-Tetrafluor-1-propen (R1234yf) umfasst,
wobei
wenn die Massen-% von HFO-1132(E), R32 und R1234yf auf Basis ihrer Summe in dem Kältemittel jeweils durch x, y und z dargestellt werden, die Koordinaten (x, y, z) in einem ternären Zusammensetzungsdiagramm, in dem die Summe aus HFO-1132(E), R32 und R1234yf 100 Massen-% beträgt, innerhalb des Bereichs einer Figur liegen, die von den Linienabschnitten MM', M'N, NV, VG und GM umgeben sind, die die folgenden fünf Punkte verbinden:
Punkt M (52,6; 0,0; 47,4),
Punkt M' (39,2; 5,0; 55,8),
Punkt N (27,7; 18,2; 54,1),
Punkt V (11,0; 18,1; 70,9) und
Punkt G (39,6; 0,0; 60,4),
oder auf diesen Linienabschnitten (mit Ausnahme der Punkte auf dem Linienabschnitt GM) liegen;
der Linienabschnitt MM' durch die Koordinaten (0,132y²-3,34y+52,6, y, -0,132y²+2,34y+47,4) dargestellt wird;
der Linienabschnitt M'N durch die Koordinaten (0,0596y²-2,2541y+48,98, y, -0,0596y²+1,2541y+51,02) dargestellt wird;
der Linienabschnitt VG durch die Koordinaten (0,0123y²-1,8033y+39,6, y, -0,0123y²+0,8033y+60,4) dargestellt wird; und
die Linienabschnitte NV und GM Geraden sind.

2. Zusammensetzung gemäß Anspruch 1 zur Verwendung als Arbeitsfluid für eine Kältemaschine, wobei die Zusammensetzung ferner ein Kühlöl umfasst.

3. Zusammensetzung gemäß Anspruch 1 oder 2 zur Verwendung als alternatives Kältemittel für R410A.

4. Verwendung der Zusammensetzung gemäß Anspruch 1 oder 2 als alternatives Kältemittel für R410A.

5. Kältemaschine, umfassend die Zusammensetzung gemäß Anspruch 1 oder 2 als Arbeitsfluid.

6. Verfahren zum Betreiben einer Kältemaschine, umfassend einen Schritt, bei dem die Zusammensetzung gemäß Anspruch 1 oder 2 als Arbeitsfluid in einer Kältemaschine zirkuliert wird.

## Revendications

1. Composition comprenant un fluide frigorigène,
le fluide frigorigène comprenant du trans-1,2-difluoroéthylène (HFO-1132 (E)), du difluorométhane (R32), et du 2,3,3,3-tétrafluoro-1-propène (R1234yf), dans laquelle
lorsque le % en masse de HFO-1132 (E), de R32, et de R1234yf basé sur leur somme dans le fluide frigorigène est respectivement représenté par x, y et z, les coordonnées (x, y, z) dans un diagramme de composition ternaire dans lequel la somme de HFO-1132 (E), de R32, et de R1234yf est de 100 % en masse se situent dans la plage d'une figure entourée par les segments de ligne MM', M'N, NV, VG et GM qui relient les 5 points suivants :
point M (52,6, 0,0, 47,4),
point M' (39,2, 5,0, 55,8),
point N (27,7, 18,2, 54,1),
point V (11,0, 18,1, 70,9), et
point G (39,6, 0,0, 60,4),
ou sur ces segments de ligne (à l'exclusion des points situés sur le segment de ligne GM) ;
le segment de ligne MM' est représenté par des coordonnées (0,132y²-3,34y+52,6, y, -0,132y²+2,34y+47,4) ;
le segment de ligne M'N est représenté par des coordonnées (0,0596y²-2,2541y+48,98, y, -0,0596y²+1,2541y+51,02) ;
le segment de ligne VG est représenté par des coordonnées (0,0123y²-1,8033y+39,6, y, -0,0123y²+0,8033y+60,4) ; et
les segments de ligne NV et GM sont des lignes droites.

2. Composition selon la revendication 1, pour une utilisation comme fluide de travail pour une machine frigorifique, dans laquelle la composition comprend en outre une huile frigorigène.

3. Composition selon la revendication 1 ou la revendication 2, pour une utilisation comme fluide frigorigène alternatif au R410A.

4. Utilisation de la composition selon la revendication 1 ou la revendication 2 comme fluide frigorigène alternatif au R410A.

5. Machine frigorifique comprenant la composition selon la revendication 1 ou la revendication 2 en tant que fluide de travail.

6. Procédé de fonctionnement d'une machine frigorifique, comprenant l'étape consistant à faire circuler la composition selon la revendication 1 ou la revendication 2 en tant que fluide de travail dans une machine frigorifique.
